# EUROPEAN PATENT SPECIFICATION

(11) **EP 1 147 957 B1**
(45) Date of publication and mention of the grant of the patent: **18.03.2009**
(21) Application number: 01000116.2
(22) Date of filing: 19.04.2001
(51) Int. Cl.: B60S 3/00

(54) **Apparatus for drying vehicles**
Trocknungsvorrichtung für Kraftfahrzeuge
Installation de séchage pour véhicules

(30) Priority: 20.04.2000 FI 20000960
(43) Date of publication of application: 24.10.2001
(73) Proprietor: Tammermatic Oy, 33300 Tampere (FI)
(72) Inventor: Syvälahti, Esa, 37120, Nokia (FI)
(74) Representative: Huhtanen, Ossi Jaakko

(56) References cited:
- DE-A- 4 027 613
- DE-U- 8 910 599
- US-A- 3 375 592
- US-A- 4 561 193
- US-A- 4 589 160
- US-A- 4 622 714
- US-A- 5 535 475

## Description

The invention relates to an apparatus for drying vehicles.

An apparatus for drying vehicles is typically used in automatic vehicle washing apparatuses. The vehicle washing apparatus can consist of a 'washing street', i.e. apparatuses for pre-wash, washing, waxing and drying are arranged one after the other in a fixed frame, which typically has the shape of a portal, and the vehicle moves via these apparatuses. In another typical vehicle washer apparatuses for pre-wash, washing, waxing and drying are arranged in a movable frame, which moves to and fro in the longitudinal direction of a stationary vehicle.

A typical apparatus for drying vehicles comprises an elongated nozzle arranged in the cross-direction of the vehicle. Such a solution is described e.g. in German publication no. 4,431,102. The structure of this apparatus is difficult to implement, and controlling the magnitude and direction of the airflow is also troublesome. If bars or screws have to be installed through the nozzle opening, they disturb the airflow, which results in poorer drying. The airflow from the nozzle is turbulent, and thus the drying capacity of the apparatus is rather low. In another prior art solution the drying apparatus is provided with 1 to 3 openings with rather a large diameter of about 10 to 30 cm in the cross-direction of the vehicle. Air is blown onto the vehicle surface through the openings. The openings are placed at a distance of about 1 to 2 metres from the vehicle. The drying capacity of such an apparatus is rather low.

US patent 4,622,714 discloses an apparatus for stripping rinse water from the surface of a vehicle. The apparatus comprises a housing for drying air, to which a few tapered nozzles are arranged. A tapered nozzle accelerates the airflow, but the airflow creates a low pressure between the taper ends, thus causing turbulence to the airflow. As a result the drying remains very unsatisfactory.

US patents 4,991,316 and 4,872,238 describe vehicle drying apparatuses, in which the air dividers are provided with a plurality of adjacent pipe-like nozzles. The pipe-like nozzles are formed to taper towards the tips. The tapering tip accelerates the airflow, but turbulence is formed after the ends of the tips. Consequently the blown air does not create an adequately even air curtain and the drying result remains unsatisfactory. DE-A-4 027 613 discloses a vehicle washing apparatus having means for drying the vehicle. The vehicle is dried by blowing air through nozzle pipes in the apparatus. Furthermore, US-A-3375592 shows a vehicle dryer with a plurality of very short channels, which do not sufficiently stabilise the airflow.

The object of the present invention is to provide an apparatus for drying a vehicle properly.

The apparatus according to the invention is characterized by the features of claim 1.

The basic idea of the invention is that the apparatus for drying vehicles comprises a nozzle provided with several elongated openings in the cross-direction of the vehicles, the cross section of the openings remaining substantially equal. The idea of a preferred embodiment is that there are more than 15 openings per meter. The idea of a second preferred embodiment is that the length of the elongated opening is over 20 mm, preferably over 30 mm. The idea of a third preferred embodiment is that the elongated openings are substantially round in cross-section. The idea of a fourth preferred embodiment is that the drying apparatus is provided with a nozzle which dries a side surface of the vehicle and in which the elongated openings slope downwards.

An advantage of the invention is that the drying airflow is stabilized in an elongated opening having a constant cross section, and thus the range of the airflow increases. In that case the airflow can be managed and controlled very well and the drying effect will be excellent. The nozzle provides an air curtain that is narrow in the longitudinal direction of the vehicle and even in the lateral direction of the vehicle. If the elongated openings are round, substantially no turbulence will occur in the openings, and consequently a very even airflow is achieved. By arranging the nozzles to slope downwards, water drops can be blown downwards from the side surface of the vehicle, which further improves drying efficiency.

The invention will be described in greater detail in the accompanying drawings, in which
Figure 1 schematically illustrates a vehicle washing apparatus,
Figure 2 is a cross-sectional view of a section of an upper nozzle in an upper air divider
Figure 3 is a cross-sectional view of a detail of the vehicle washing apparatus shown in Figure 1 along line A-A, and
Figure 4 is a cross-sectional view of a side nozzle in a side air divider.

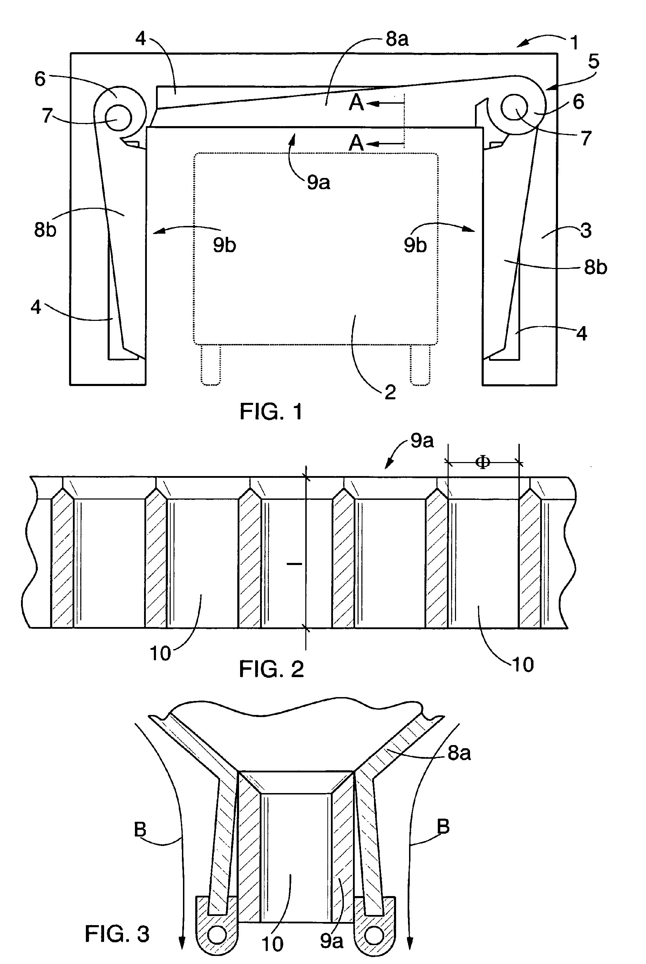

Figure 1 illustrates an automatic vehicle washing apparatus 1 and the dotted line presents the vehicle 2 to be washed. The automatic vehicle washing apparatus 1 comprises a frame 3, which is arranged to move on rails to and fro in the longitudinal direction of the vehicle 2 to be washed in the manner known per se. The frame 3 is provided with washing means 4 for pre-wash, washing and waxing, for example. The washing means 4 include nozzles for spraying washing chemicals and nozzles for spraying water. The nozzles for spraying water can be e.g. high-pressure nozzles which produce a pointed jet, and thus the vehicle is washed without washing brushes. If necessary, the washing means 4 can naturally also comprise e.g. washing brushes and other similar washing means. The washing means 4 and the means for moving and controlling the frame 3 and the washing means 4 are not illustrated in greater detail in the figure for the sake of clarity because their function and structure are known per se to a person skilled in the art.

The automatic vehicle washing apparatus 1 further includes a drying apparatus 5 for drying the vehicle 2. The drying apparatus comprises at least one fan 6 which is driven by a motor 7, typically by an electric motor. The airflow generated by the fan 6 is fed to air dividers 8a and 8b. The upper air divider is marked with reference numeral 8a and the side air divider with reference numeral 8b. The upper air divider 8a is provided with an upper nozzle 9a and the side air divider 8b is provided with side nozzles 9b. The distance of the nozzles 9a and 9b from the vehicle surface is preferably about 100 mm. Most preferably air is fed into the upper air divider 8a only from one side of it, i.e. by one fan 6. In that case airflow management is rather easy to implement. The air dividers 8a and 8b are most preferably wedge-shaped: they are at their widest at the end towards the fan 6 and taper away from the fan 6. Thus the airflow can be divided evenly by the nozzles 9a and 9b substantially along the whole length of the air dividers 8a and 8b.

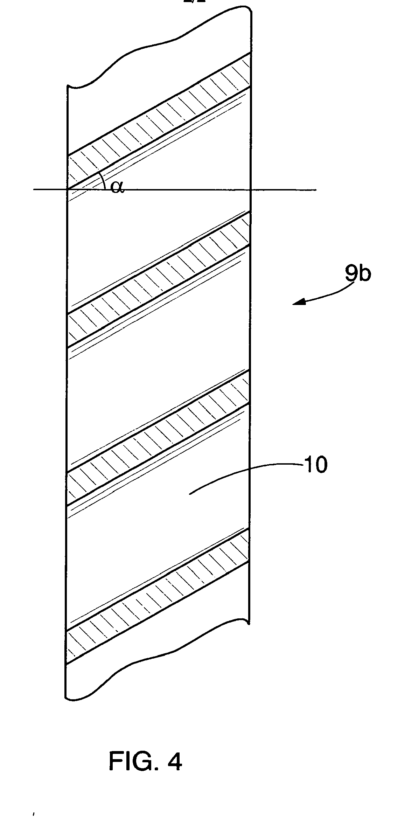

A more detailed structure of the upper nozzle 9a appears from Figures 2 and 3 and a more detailed structure of the side nozzles 9b from Figure 4. The nozzles 9a and 9b are elongated in the cross-direction of the vehicle, uniform in structure and they are provided with several adjacent elongated openings 10 in the direction of the flow. The expression 'elongated opening' means that the opening 10 is so long that the opening 10 stabilizes the air flowing through it, i.e. the opening 10 is tubular. The length I of the opening 10 is over 20 mm, preferably over 30 mm. Very good results have been achieved with a nozzle in which the length of the opening is about 40 mm and the diameter φ of the opening about 18 mm. The diameters φ of the opening 10 can vary between 10 and 50 mm, for example. However, the cross section of the opening remains substantially equal, i.e. the cross section of the opening is equal in size in the upper and lower end of the opening as well as the middle part thereof. The constant cross section of the opening provides a required stability effect for the flow. There are typically at least 10 openings 10 per meter in the cross-direction of the vehicle. For example, if the capacity of the fan 6 is 4 kW, there are preferably 40 openings with a diameter φ of 18 mm per meter. The nozzles 9a and 9b are most preferably made of plastic by means of injection moulding, for example, and thus the weight of the nozzles is relatively small. The area of the openings is comparable to the electric power used to generate the airflow. When the power increases, the area can also be enlarged. It has been found out that optimal conditions are achieved with a power of 4 kW, as described above.

Figure 3 is a cross-sectional view of a detail of the upper air divider 8a. Thanks to the nozzle according to the invention, the walls of the upper air divider 8a can be relatively thin. Furthermore, the walls need not be provided with support flanges or the like. In that case the air flowing through the openings 10 generates a very efficient and substantially laminar by-pass flow, which is illustrated with arrows B in Figure 3. The by-pass flow further intensifies the drying effect of the airflow.

Figure 4 shows a detail of the side nozzle 9b. The openings 10 of the side nozzle can be slightly larger than those 10 of the upper nozzle 9a. For example, if the diameter of the openings 10 of the upper nozzle 9a is about 18 mm, the diameter of the openings of the side nozzle 9b can be about 27 mm. The openings of the side nozzle 9b slope downwards so that their angle α of slope, i.e. deviation from the horizontal level, is larger than 20°. The angle α of slope is preferably about 30°. The angle α of slope can vary between 20 and 60 degrees, for example. Thanks to the slanting position, the openings 10 of the side nozzle 9b direct the airflow at the side wall of the vehicle 2, and consequently moisture and water drops on the vehicle surface flow downwards along the surfaces of the side walls and drying is very efficient.

The drawings and the related description are only intended to illustrate the inventive concept. The details of the invention can vary within the scope of the claims. Thus the openings 10 need not be round, but the nozzles 9a and 9b can be e.g. rectangular boxes provided with straight partitions, in which case the openings 10 are quadratic or rectangular in cross-section, for example. The openings 10 are, however, most preferably round, i.e. they do not comprise corners that could cause turbulence in the airflow. Furthermore, if desired, the openings 10 of the upper nozzle 9a can also be arranged in a slanting position. The nozzles 9a and 9b can also comprise several successive lines of openings in the longitudinal direction of the vehicle. In the successive lines of openings the angles of slope of the openings can also differ from one another. In that case the lines of openings in the apparatus can be provided with closing members for e.g. opening and closing successive lines of openings alternately. Thus the blow direction can be changed in a simple manner. In addition, the openings 10 can be made of pipes which are pivoted to enable altering of the angle of slope of the pipes. The air to be blown can be supplied to the air dividers 8a and 8b from an external source, too, in which case the air divider 8a and 8b does not need to be provided with a fan directly connected to it. The automatic vehicle washing apparatus in which the drying apparatus is typically used can be similar to the one shown in Figure 1 or consist of a 'washing street', i.e. apparatuses for pre-wash, washing, waxing and drying are arranged one after the other in a fixed frame, which typically has the shape of a portal, and the vehicle moves via these apparatuses.

## Claims

1. An apparatus for drying vehicles which apparatus comprises at least one air divider (8a, 8b) provided in the cross-direction of the vehicle (2) to be dried with a line of a plurality of channels, which channels have a cross section which remains substantially equal and which channels are elongated and without corners, **characterized in that** the air divider (8a, 8b) is provided with a nozzle (9a, 9b) having more than 10 channels per meter.

2. An apparatus according to claim 1, **characterized in that** the length of the elongated channel is over 20 mm.

3. An apparatus according to claim 2, **characterized in that** the length of the elongated channel is over 30 mm.

4. An apparatus according to any one of the preceding claims, **characterized in that** the elongated channels are round in cross-section.

5. An apparatus according to claim 4, **characterized in that** the diameter of the elongated channel ranges from 10 mm to 50 mm.

6. An apparatus according to any one of the preceding claims, **characterized in that** the nozzle (9a, 9b) is an elongated substantially uniform structure.

7. An apparatus according to claim 6, **characterized in that** the nozzle (9a, 9b) is made by means of injection moulding.

8. An apparatus according to any one of the preceding claims, **characterized in that** the apparatus comprises a side nozzle (9b) which is arranged to dry a side surface of the vehicle (2) and in which the elongated channels (10) slope downwards.

9. An apparatus according to claim 8, **characterized in that** the angle of slope of the elongated channels is larger than 20°.

10. An apparatus according to claim 9, **characterized in that** the angle of slope is about 30°.

11. An apparatus according to any one of the preceding claims, **characterized in that** the apparatus (5) for drying vehicles is arranged in an automatic vehicle washing apparatus (1).

## Patentansprüche

1. Vorrichtung zum Trocknen von Fahrzeugen, welche Vorrichtung wenigstens einen Luftteiler (8a, 8b) aufweist, der in der Querrichtung des Fahrzeugs (2), das getrocknet werden soll, mit einer Reihe mehrerer Kanäle vorgesehen ist, welche Kanäle einen Querschnitt haben, der im Wesentlichen gleich bleibt, und welche Kanäle länglich und ohne Ecken sind, **dadurch gekennzeichnet, dass** der Luftteiler (8a, 8b) mit einer Düse (9a, 9b) vorgesehen ist, die mehr als 10 Kanäle pro Meter hat.

2. Vorrichtung nach Anspruch 1, **dadurch gekennzeichnet, dass** die Länge des länglichen Kanals über 20 mm ist.

3. Vorrichtung nach Anspruch 2, **dadurch gekennzeichnet, dass** die Länge des länglichen Kanals über 30 mm ist.

4. Vorrichtung nach einem der vorhergehenden Ansprüche, **dadurch gekennzeichnet, dass** die länglichen Kanäle im Querschnitt rund sind.

5. Vorrichtung nach Anspruch 4, **dadurch gekennzeichnet, dass** der Durchmesser des länglichen Kanals zwischen 10 mm und 50 mm liegt.

6. Vorrichtung nach einem der vorhergehenden Ansprüche, **dadurch gekennzeichnet, dass** die Düse (9a, 9b) eine längliche im Wesentlichen einheitliche Konstruktion ist.

7. Vorrichtung nach Anspruch 6, **dadurch gekennzeichnet, dass** die Düse (9a, 9b) durch Spritzgießen gemacht ist.

8. Vorrichtung nach einem der vorhergehenden Ansprüche, **dadurch gekennzeichnet, dass** die Vorrichtung eine Seitendüse (9b) aufweist, die angeordnet ist, eine Seitenfläche des Fahrzeugs (2) zu trocknen, und in der die länglichen Kanäle (10) nach unten geneigt sind.

9. Vorrichtung nach Anspruch 8, **dadurch gekennzeichnet, dass** der Neigungswinkel der länglichen Kanäle größer als 20° ist.

10. Vorrichtung nach Anspruch 9, **dadurch gekennzeichnet, dass** der Neigungswinkel etwa 30° ist.

11. Vorrichtung nach einem der vorangehenden Ansprüche, **dadurch gekennzeichnet, dass** die Vorrichtung (5) zum Trocknen von Fahrzeugen in einem automatischen Fahrzeugwaschapparat (1) angeordnet ist.

## Revendications

1. Appareil pour le séchage des véhicules, lequel appareil comprend au moins un diviseur d'air (8a, 8b) disposé dans la direction transversale du véhicule (2) à sécher avec une ligne d'une pluralité de canaux, lesquels canaux ont une section transversale qui demeure essentiellement égale et sont allongés et sans recoins, **caractérisé en ce que** le diviseur d'air (8a, 8b) est équipé d'une buse (9a, 9b) ayant plus de 10 canaux par mètre.

2. Appareil selon la revendication 1, **caractérisé en ce que** la longueur du canal allongé est de plus de 20 millimètres.

3. Appareil selon la revendication 2, **caractérisé en ce que** la longueur du canal allongé est de plus de 30 millimètres.

4. Appareil selon l'une quelconque des revendications précédentes, **caractérisé en ce que** les canaux allongés sont circulaires en section transversale.

5. Appareil selon la revendication 4, **caractérisé en ce que** le diamètre du canal allongé s'étend de 10 millimètres à 50 millimètres.

6. Appareil selon l'une quelconque des revendications précédentes, **caractérisé en ce que** la buse (9a, 9b) est une structure allongée essentiellement uniforme.

7. Appareil selon la revendication 6, **caractérisé en ce que** la buse (9a, 9b) est fabriquée par moulage par injection.

8. Appareil selon l'une quelconque des revendications précédentes, **caractérisé en ce que** l'appareil comprend une buse latérale (9b) qui est agencée pour sécher une surface latérale du véhicule (2) et dans laquelle les canaux allongés (10) sont inclinés vers le bas.

9. Appareil selon la revendication 8, **caractérisé en ce que** l'angle d'inclinaison des canaux allongés est plus grand que 20°.

10. Appareil selon la revendication 9, **caractérisé en ce que** l'angle d'inclinaison est d'environ 30°.

11. Appareil selon l'une quelconque des revendications précédentes, **caractérisé en ce que** l'appareil (5) pour le séchage des véhicules est agencé dans un appareil (1) de lavage automatique de véhicule.
